# EUROPÄISCHE PATENTSCHRIFT

(11) **EP 2 466 550 B1**
(45) Veröffentlichungstag und Bekanntmachung des Hinweises auf die Patenterteilung: **31.07.2013**
(21) Anmeldenummer: 11191988.2
(22) Anmeldetag: 05.12.2011
(51) Int. Cl.: G07C 5/00, B60K 15/077, F02B 77/08, G01F 23/00, B67D 7/08

(54) **Verfahren zur Unterstützung einer Fahrzeugwartung eines Kraftfahrzeugs**
Method to support motor vehicle maintenance
Procédé destiné à assister une maintenance de véhicule automobile

(30) Priorität: 15.12.2010 DE 102010054673
(43) Veröffentlichungstag der Anmeldung: 20.06.2012
(73) Patentinhaber: Continental Automotive GmbH, 30165 Hannover (DE)
(72) Erfinder: Fokkelman, Joris, 93105 Tegernheim (DE); Böld, Martin, 93051 Regensburg (DE)

(56) Entgegenhaltungen:
- EP-A1- 2 157 000
- DE-A1- 10 021 721
- US-A1- 2008 047 522
- US-B1- 6 761 193

## Beschreibung

Die Erfindung bezieht sich auf ein Verfahren zur Unterstützung einer Fahrzeugwartung eines Kraftfahrzeugs mit einem Fahrzeugantriebsmotor und einem eine Füllstandsmesseinrichtung aufweisenden Antriebsenergiespeicher für den Fahrzeugantriebsmotor, wobei von einer Selbstkontrolleinrichtung des Kraftfahrzeugs ein Erfordernis eines Wartungsvorgangs an dem Kraftfahrzeug als Wartungserfordernis erkannt wird und wobei einem Fahrer des Kraftfahrzeugs mittels einer in dem Kraftfahrzeug angeordneten Informationseinrichtung das Wartungserfordernis als Wartungshinweis übermittelt wird.

Ein vorgenanntes Verfahren ist für ein Kraftfahrzeug bekannt, wobei einem Fahrer des Fahrzeugs bei Erkennen eines Wartungserfordernisses augenblicklich ein Wartungshinweis übermittelt wird.

Weiterhin ist aus DE 10 2008 005 327 A1 ein Verfahren zur Routenplanung und Zielführung bekannt, bei welchem ein Fahrzeugführer die Möglichkeit hat, an einer Tankstelle angebotene Serviceleistungen als ein Kriterium zur Ermittlung einer Fahrtroute vorzugeben. Die Art der vorgegebenen Serviceleistungen beruht auf einem Wunsch des Fahrers.

Die EP 215 7000 A1 zeigt eine Anzeigevorrichtung für ein Kraftfahrzeug zur Information der Fahrer über die Notarendigkeit einer Wartung.

Nachteilig bei den aus dem Stand der Technik bekannten Verfahren ist, dass der Fahrer entweder einen Wartungshinweis erhält, die Wartung zu diesem Zeitpunkt aber nicht vornehmen kann, oder aber gezwungen ist, regelmäßig Routinekontrollen vorzunehmen und dabei ein Wartungserfordernis zu erkennen.

Ausgehend vom Stand der Technik liegt der Erfindung die Aufgabe zugrunde, ein Verfahren der eingangs genannten Art anzugeben, mit welchem der Wartungshinweis für den Fahrer besser nutzbar ist.

Diese Aufgabe wird erfindungsgemäß dadurch gelöst, dass der Wartungshinweis in Abhängigkeit eines bei einem Ausschalten des Fahrzeugantriebsmotors vorliegenden, von der Füllstandsmesseinrichtung erfassten Ausschaltfüllstands an den Fahrer übermittelt wird, wobei der Wartungshinweis dann übermittelt wird, wenn entweder der Ausschaltfüllstand niedriger ist als ein voreingestellter Füllstandsschwellwert oder wenn eine Füllstandsdifferenz zwischen einem bei einem nachfolgenden erneuten Einschalten des Fahrzeugantriebsmotors vorliegenden, von der Füllstandsmesseinrichtung erfassten Einschaltfüllstand und dem vorhergehenden Ausschaltfüllstand ein positives Füllstandsmaß angibt.

Das Kraftfahrzeug kann zum Beispiel ein Personenkraftwagen oder ein Nutzfahrzeug, wie beispielsweise ein Lastkraftwagen oder ein Omnibus, sein.

Bei dem Kraftfahrzeug kann es sich zum Beispiel um ein mit einem Verbrennungsmotor angetriebenes Kraftfahrzeug handeln. Der Fahrzeugantriebsmotor ist dann eine Brennkraftmaschine und der Antriebsenergiespeicher ein Kraftstofftank; die Füllstandsmesseinrichtung misst den Füllstand des Kraftstoffs in dem Kraftstofftank.

Es kann sich bei dem Kraftfahrzeug aber beispielsweise auch um ein Elektrofahrzeug handeln. Dann ist der Fahrzeugantriebsmotor ein Elektromotor, und der Antriebsenergiespeicher ist ein Akkumulator, ein Speicher für elektrische Energie. In diesem Fall misst die Füllstandsmesseinrichtung den Ladezustand des Akkumulators.

Von besonderem Vorteil ist bei dem erfindungsgemäßen Verfahren, dass der Fahrer genau dann den auf ein Wartungserfordernis zurückgehenden Wartungshinweis erhält, wenn damit zu rechnen ist, dass der Fahrer das Kraftfahrzeug entweder gerade betanken möchte oder eine Betankung gerade abgeschlossen hat; denn in diesen Fällen befindet sich das Kraftfahrzeug regelmäßig an einer Tankstelle, und üblicherweise hat der Fahrer an Tankstellen die Möglichkeit, die erforderliche Wartung vorzunehmen: Zum einen befindet sich das Kraftfahrzeug an der Tankstelle nicht im fließenden Verkehr oder überhaupt auf einer Fahrt und zum anderen steht an Tankstellen regelmäßig ein Angebot an Kraftfahrzeugverbrauchsstoffen und Kraftfahrzeugersatzteilen zur Vornahme der Wartung zur Verfügung. Die Tankstelle kann zum Beispiel eine Tankstelle für Fluidkraftstoffe oder beispielsweise eine Tankstelle zum Nachladen von elektrischer Energie in den Akkumulator des Kraftfahrzeugs sein. Mit der Erfindung wird dem Fahrer der Wartungshinweis vorteilhaft zeitnah zu einer möglichen Vornahme der Wartung übermittelt. Damit ist die Nutzbarkeit des Wartungshinweises für den Fahrer wesentlich verbessert. Zudem sind für die Erfindung weder eine Navigationsanlage noch eine satellitengestütztes Positionserkennungseinrichtung in dem Kraftfahrzeug erforderlich; auf zusätzliche teure, aufwendige und möglicherweise ausfallgefährdete technische Vorrichtungen in dem Kraftfahrzeug kann mit der Erfindung vorteilhaft verzichtet werden.

Gemäß der ersten Variante der Erfindung wird von einem Halt zum Tanken (Tankhalt) ausgegangen, wenn der Füllstand des Antriebsenergiespeichers beim Ausschalten des Fahrzeugantriebsmotors niedriger ist als ein voreingestellter Füllstandsschwellwert. Bei einem derartigen Halt ist davon auszugehen, dass sich das Kraftfahrzeug an einer Tankstelle befindet. Der Füllstandsschwellwert kann beispielsweise ein definiertes Reservevolumen sein, welches für den Betrieb des Kraftfahrzeugs eine Not-Restreichweite gewährleistet.

Gemäß der zweiten Variante der Erfindung wird von einem gerade zuendegehenden Tankhalt ausgegangen, wenn der Füllstand des Antriebsenergiespeichers beim Einschalten des Antriebsmotors größer ist als bei dessen vorhergehendem Ausschalten, das heißt der Einschaltfüllstand größer ist als der Ausschaltfüllstand, und die Differenz zwischen Einschaltfüllstand und Ausschaltfüllstand also ein positives Füllstandsmaß angibt. Damit ist von einer zwischenzeitlich erfolgten Betankung auszugehen, wobei sich das Kraftfahrzeug aber noch an der Tankstelle befindet. Die Zuverlässigkeit des erfindungsgemäßen Verfahrens kann dabei vorteilhaft weiter erhöht werden, wenn bei der zweiten Variante der Erfindung das Füllstandsmaß voreingestellt ist und ein nicht unerhebliches Füllstandsmaß ist. Damit kann ausgeschlossen werden, dass zum Beispiel eine - üblicherweise nicht an einer Tankstelle stattfindende - Kanisterbetankung zwischen dem Ausschalten und dem Einschalten des Antriebsmotors vorgenommen worden ist oder dass durch Speicherregeneration oder durch Treibstoffrücklauf der Füllstand während eines Fahrzeugstillstandes angestiegen ist. Das nicht unerhebliche Füllstandsmaß ist mithin ein Füllstandsmaß, das nach der allgemeinen Lebenserfahrung einen Tankvorgang an einer Tankstelle vermuten lässt. Vorzugsweise beträgt das nicht unerhebliche Füllstandsmaß bei einem Kraftstoff in einem Kraftstofftank - korrespondierend mit dem Volumen marktüblicher Kraftstoffkanister - mindestens 5 1.

Das erfindungsgemäße Verfahren hilft, einen Zeitpunkt zu erkennen, an dem der Fahrer Möglichkeiten und auch Motivation hat, eine Wartung an dem Kraftfahrzeug durchzuführen. Als geeigneter Moment wird hierzu ein Tankvorgang gewählt, da sich der Fahrer hier schon entschieden hat, einen bestimmten Typ von Wartung, nämlich das Tanken, vorzunehmen. Das Tanken erfolgt in der Regel an einer Tankstelle, und an einer Tankstelle sind üblicherweise die am häufigsten erforderlichen Wartungsmaterialien, einschließlich Austauschgebrauchsteilen und Pflegematerialien, verfügbar. Beispiele für Wartungshinweise, die dem Fahrer mit dem erfindungsgemäßen Verfahren übermittelt werden, können sein: Reifendruck anpassen; Abgasnachbehandlungszusatz, beispielsweise Harnstoff aufweisenden Abgasnachbehandlungszusatz, nachtanken; Wischwasser nachfüllen; Motoröl nachfüllen; Batterie austauschen; Klimagas für eine Fahrzeugklimatisierungsanlage nachfüllen; Leuchtmittel ersetzen; Wischblätter ersetzen; fahrzeugeigene Kameras und Kameralinsen reinigen. Die vorgenannte Aufzählung stellt lediglich eine beispielhafte Auswahl dar; grundsätzlich kann jeder Wartungsvorgang umfasst sein, der von dem Fahrer an der Tankstelle in der Regel vorgenommen werden kann.

Zusätzliche vorteilhafte Weiterbildungen der Erfindung sind in den Unteransprüchen angegeben.

Einer vorteilhaften Weiterbildung der Erfindung entsprechend sind in dem Kraftfahrzeug zwei unterschiedliche Übermittlungsvoreinstellungen vorgesehen, von denen eine für das Kraftfahrzeug eingestellt ist, wobei gemäß einer ersten Übermittlungsvoreinstellung der Wartungshinweis nur dann übermittelt wird, wenn der Ausschaltfüllstand niedriger ist als der Füllstandsschwellwert, oder gemäß der zweiten Übermittlungsvoreinstellung der Wartungshinweis nur dann übermittelt wird, wenn die Füllstandsdifferenz zwischen dem Einschaltfüllstand und dem Ausschaltfüllstand größer ist als das Füllstandsmaß. Auf diese Weise kann mit der Übermittlungsvoreinstellung festgelegt werden, ob der Wartungshinweis bei Beginn oder gegen Ende eines Tankhalts erfolgen soll.

Gemäß einer vorteilhaften Weiterbildung der Erfindung umfasst die eingestellte Übermittlungsvoreinstellung eine Regionalkennung. Vorzugsweise gibt die Regionalkennung die Region an, in der das Kraftfahrzeug zumindest überwiegend betrieben wird. Die Regionalkennung kann zum Beispiel eine Länderkennung sein und ein bestimmtes Land, beispielsweise Deutschland oder China oder Vereinigte Staaten von Amerika, angeben. Es ist aber auch denkbar, dass die Regionalkennung ein länder-übergreifendes Territorium, beispielsweise Europa oder Nordamerika oder Südamerika oder Südostasien oder Arabien, angibt.

Man könnte sich vorstellen, dass der Wartungshinweis zum Beispiel haptisch dem Fahrer übermittelt wird. Für eine gute Wahrnehmbarkeit und gleichzeitig ermöglichte umfassende Informationsübermittlung ist es jedoch besonders vorteilhaft, wenn gemäß einer anderen Weiterbildung der Erfindung der Wartungshinweis dem Fahrer optisch und/oder akustisch übermittelt wird.

Zur vorteilhaft weiteren Erhöhung der Sicherheit ist es von besonderem Vorteil, wenn gemäß einer anderen Weiterbildung der Erfindung ein die Verkehrssicherheit des Kraftfahrzeugs betreffender Wartungshinweis bei eingeschaltetem Fahrzeugantriebsmotor zusätzlich unmittelbar bei Erkennen des Erfordernisses des Wartungsvorganges durch die Selbstkontrolleinrichtung dem Fahrer mittels der Informationseinrichtung übermittelt wird. Damit erfolgt ein Hinweis zum Beispiel auf ein defektes Leuchtmittel in einem Scheinwerfer oder in einer Rückleuchteneinheit des Kraftfahrzeugs nicht nur beim nächsten Tankhalt, sondern bereits sofort bei Erkennen des Fehlers, so dass in solchen Fällen der Fahrer auch unmittelbar einen Halt einlegen und die Wartung vornehmen sowie dazu zum Beispiel eine Tankstelle ansteuern kann.

Ausführungsbeispiele der Erfindung sind in der Zeichnung dargestellt und werden im Folgenden näher beschrieben. Es zeigen:
- Figur 1: ein Kraftfahrzeug in schematisierter Darstellung und
- Figur 2: ein Ablaufdiagramm in vereinfachter Darstellung.

Sich entsprechende Elemente sind in allen Figuren mit jeweils gleichen Bezugszeichen versehen.

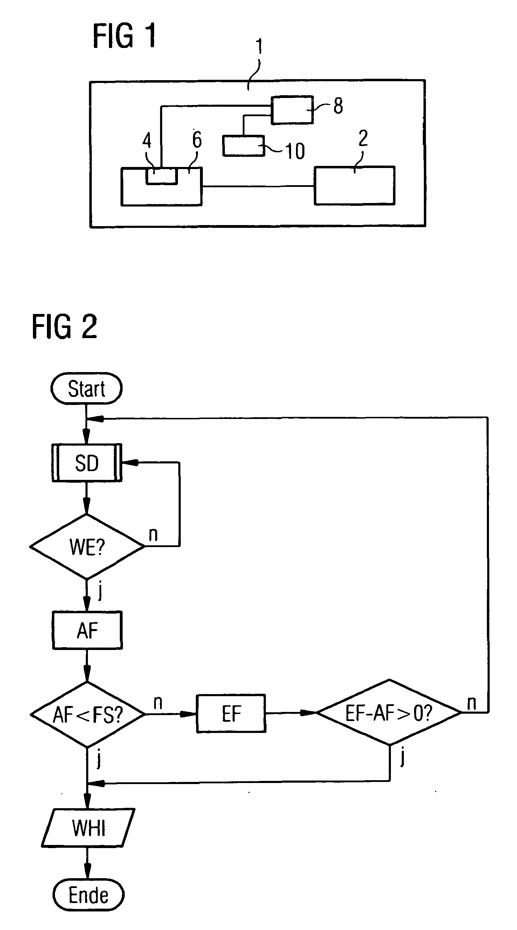

Ein Beispiel eines Verfahrens zur Unterstützung einer Fahrzeugwartung eines Kraftfahrzeugs 1 (siehe Figur 1) ist mit einem Ablaufdiagramm nach Figur 2 dargestellt. In dem Ablaufdiagramm bedeutet der Buchstabe j ein ja und der Buchstabe n ein nein.

Das Kraftfahrzeug 1 besitzt einen Fahrzeugantriebsmotor 2 und einen eine Füllstandsmesseinrichtung 4 aufweisenden Antriebsenergiespeicher 6 für den Fahrzeugantriebsmotor 2. Außerdem sind eine Selbstkontrolleinrichtung 8 zur Vornahme einer Fahrzeugselbstdiagnose sowie eine Informationseinrichtung 10 zur Übermittlung von Informationen an einen Fahrer des Kraftfahrzeugs 1 vorgesehen. Die Informationseinrichtung 10 kann beispielsweise eine optische Anzeigevorrichtung und/oder einen Lauterzeuger, zum Beispiel einen Lautsprecher, aufweisen.

Das Verfahren zur Unterstützung der Fahrzeugwartung des Kraftfahrzeugs 1 läuft derart ab, dass von der Selbstkontrolleinrichtung 8 ein Selbstdiagnosevorgang SD durchgeführt wird. Dabei wird überprüft, ob ein Erfordernis eines Wartungsvorgangs vorliegt. Wird von der Selbstkontrolleinrichtung 8 des Kraftfahrzeugs 1 ein Erfordernis eines Wartungsvorgangs an dem Kraftfahrzeug 1 als Wartungserfordernis WE erkannt, so wird dieses Wartungserfordernis WE dem Fahrer des Kraftfahrzeugs 1 mittels der in dem Kraftfahrzeug 1 angeordneten Informationseinrichtung 10 als Wartungshinweis WHI grundsätzlich übermittelt, wobei die Übermittlung von nachfolgend beschriebenen weiteren Bedingungen abhängig ist.

Die Übermittlung des Wartungshinweises WHI an den Fahrer erfolgt in Abhängigkeit eines bei einem Ausschalten des Fahrzeugantriebsmotors 2 vorliegenden, von der Füllstandsmesseinrichtung 4 erfassten Ausschaltfüllstandes AF des Antriebsenergiespeichers 6. Dabei wird der Wartungshinweis WHI dann an den Fahrer übermittelt, wenn gemäß einer ersten Variante der Ausschaltfüllstand AF niedriger ist als ein voreingestellter Füllstandschwellwert FS (das heißt: AF < FS), wobei der Füllstandsschwellwert insbesondere einen Reservefüllstand oder Restfüllstand, welcher noch für eine begrenzte Zeit einen Betrieb des Fahrzeugantriebsmotors 2 und somit des Kraftfahrzeugs 1 gewährleistet, angibt.

Der Wartungshinweis WHI wird auch dann an den Fahrer übermittelt, wenn gemäß einer zweiten Variante eine Füllstandsdifferenz DF zwischen einem bei einem dem Ausschalten des Fahrzeugantriebsmotors 2 nachfolgenden erneuten Einschalten des Fahrzeugantriebsmotors 2 vorliegenden, von der Füllstandsmesseinrichtung 4 erfassten Einschaltfüllstand EF und dem vorhergehenden Ausschaltfüllstand AF ein positives Füllstandsmaß angibt (das heißt: EF - AF > 0, gleichbedeutend mit: DF > 0). Insbesondere ist das positive Füllstandsmaß ein nicht unerhebliches Füllstandsmaß FM (somit dann DF > FM); dieses nicht unerhebliche Füllstandsmaß FM steht beispielsweise für ein Kraftstoffvolumen von 5 1.

Die Bedingungen "AF < FS" sowie "DF > 0", insbesondere "DF > FM", können dabei nacheinander geprüft werden, oder es wird nur jeweils eine der Bedingungen geprüft. Vorzugsweise kann die zu prüfende der beiden Bedingungen in dem Verfahren als Übermittlungsvoreinstellung voreinstellbar sein.

Bei der oben erstgenannten Variante mit der Bedingung "AF < FS" gibt die Füllstandsmesseinrichtung, die zum Beispiel einen Tanksensor in einem als Kraftstofftank ausgebildeten Antriebsenergiespeicher aufweisen kann, die Information, dass der Antriebsenergiespeicher nahezu leer ist. Das Kraftfahrzeug 1 wird angehalten und der Fahrer zieht einen Zündschlüssel. In diesem Moment kann der Fahrer den Wartungshinweis WHI erhalten und darauf hingewiesen werden, dass eine Wartung fällig ist. Besonders vorteilhaft ist diese Variante für Länder und Regionen, in denen es üblich ist, im Rahmen eines Tankvorgangs das Kraftfahrzeug 1 nach dem Tanken an einer Zapfsäule einer Tankstelle stehenzulassen, um zum Bezahlen von erhaltenem Kraftstoff zu gehen.

Bei der oben zweitgenannten Variante mit der Bedingung "DF > 0", insbesondere "DF > FM", gibt die Füllstandsmesseinrichtung die Information, dass der Antriebsenergiespeicher gerade befüllt worden ist, das heißt dass getankt worden ist. Besonders vorteilhaft ist diese Variante für Länder und Regionen, in denen es üblich ist, im Rahmen eines Tankvorgangs nach dem Tanken zunächst das Kraftfahrzeug 1 von der Zapfsäule weg auf einen freien Stellplatz der Tankstelle zu fahren, um die Zapfsäule wieder vollständig freizugeben, und erst anschließend zum Bezahlen des erhaltenen Kraftstoffs zu gehen. Zu diesem Zeitpunkt kann das Kraftfahrzeug 1 dem Fahrer das Ergebnis des Selbstdiagnosevorgangs SD als Wartungshinweis WHI aufzeigen und dem Fahrer mitteilen, welche Wartung vorzunehmen ist. Der Fahrer verlässt dann das Kraftfahrzeug 1 und hat beim Bezahlen auch die Möglichkeit, zum Beispiel neues Wischwasser zu erwerben.

## Patentansprüche

1. Verfahren zur Unterstützung einer Fahrzeugwartung eines Kraftfahrzeugs (1) mit einem Fahrzeugantriebsmotor und einem eine Füllstandsmesseinrichtung (4) aufweisenden Antriebsenergiespeicher für den Fahrzeugantriebsmotor (2), wobei von einer Selbstkontrolleinrichtung (8) des Kraftfahrzeugs (1) ein Erfordernis eines Wartungsvorgangs an dem Kraftfahrzeug als Wartungserfordernis erkannt wird und wobei einem Fahrer des Kraftfahrzeugs (1) mittels einer in dem Kraftfahrzeug angeordneten Informationseinrichtung (10) das Wartungserfordernis als Wartungshinweis (WHL) übermittelt wird, **dadurch gekennzeichnet, dass**
der Wartungshinweis (WHI) in Abhängigkeit eines bei einem Ausschalten des Fahrzeugantriebsmotors (2) vorliegenden, von der Füllstandsmesseinrichtung (4) erfassten Ausschaltfüllstands (AF) an den Fahrer übermittelt wird,
wobei der Wartungshinweis (WHI) dann übermittelt wird, wenn entweder der Ausschaltfüllstand (AF) niedriger ist als ein voreingestellter Füllstandsschwellwert (FS) oder
wenn eine Füllstandsdifferenz (DF) zwischen einem bei einem nachfolgenden erneuten Einschalten des Fahrzeugantriebsmotors (2) vorliegenden, von der Füllstandsmesseinrichtung (4) erfassten Einschaltfüllstand (EF) und dem vorhergehenden Ausschaltfüllstand (AF) ein positives Füllstandsmaß angibt.

2. Verfahren nach Anspruch 1, **dadurch gekennzeichnet, dass** in dem Kraftfahrzeug (1) zwei unterschiedliche Übermittlungsvoreinstellungen vorgesehen sind, von denen eine für das Kraftfahrzeug (1) eingestellt ist, wobei
gemäß einer ersten Übermittlungsvoreinstellung der Wartungshinweis (WHI) nur dann übermittelt wird, wenn der Ausschaltfüllstand (AF) niedriger ist als der Füllstandsschwellwert (FS), oder
gemäß der zweiten Übermittlungsvoreinstellung der Wartungshinweis (WHI) nur dann übermittelt wird, wenn die Füllstandsdifferenz (DF) zwischen dem Einschaltfüllstand (EF) und dem Ausschaltfüllstand (AF) größer ist als das Füllstandsmaß (FM).

3. Verfahren nach Anspruch 2, **dadurch gekennzeichnet, dass** die eingestellte Übermittlungsvoreinstellung eine Regionalkennung umfasst.

4. Verfahren nach einem der vorhergehenden Ansprüche,
**dadurch gekennzeichnet, dass** der Wartungshinweis (WHI) dem Fahrer optisch und/oder akustisch übermittelt wird.

5. Verfahren nach einem der vorhergehenden Ansprüche,
**dadurch gekennzeichnet, dass** ein die Verkehrssicherheit des Kraftfahrzeugs (1) betreffender Wartungshinweis (WHI) bei eingeschaltetem Fahrzeugantriebsmotor (2) zusätzlich unmittelbar bei Erkennen des Erfordernisses des Wartungsvorganges durch die Selbstkontrolleinrichtung (8) dem Fahrer mittels der Informationseinrichtung (10) übermittelt wird.

## Claims

1. Method for assisting in maintenance of a motor vehicle (1) having a vehicle drive motor (2) and a drive energy storage means, which has a filling level measuring device (4), for the vehicle drive motor (2), with a request for a maintenance process on the motor vehicle being identified as a maintenance request by a self-monitoring device (8) of the motor vehicle (1), and with the maintenance request being transmitted as a maintenance indication (WHI) to a driver of the motor vehicle (1) by means of an information device (10) which is arranged in the motor vehicle, **characterized in that**
the maintenance indication (WHI) is transmitted to the driver as a function of a switch-off filling level (AF) which is present when the vehicle drive motor (2) is switched off and which is detected by the filling level measuring device (4), with the maintenance indication (WHI) being transmitted when either the switch-off filling level (AF) is lower than a preset filling level threshold value (FS) or
when a filling level difference (DF) between a switch-on filling level (EF), which is present when the vehicle drive motor (2) is subsequently switched on again and which is detected by the filling level measuring device (4), and the preceding switch-off filling level (AF) indicates a positive filling level value.

2. Method according to Claim 1, **characterized in that** two different transmission presets are provided in the motor vehicle (1), one of these presets being set for the motor vehicle (1), with
the maintenance indication (WHI) being transmitted in accordance with a first transmission preset only when the switch-off filling level (AF) is lower than the filling level threshold value (FS), or
the maintenance indication (WHI) is transmitted in accordance with the second transmission preset only when the filling level difference (DF) between the switch-on filling level (EF) and the switch-off filling level (AF) is greater than the filling level value (FM).

3. Method according to Claim 2, **characterized in that** the set transmission preset comprises a regional identifier.

4. Method according to one of the preceding claims, **characterized in that** the maintenance indication (WHI) is transmitted to the driver in an optical and/or acoustic manner.

5. Method according to one of the preceding claims, **characterized in that** a maintenance indication (WHI) which relates to the roadworthiness of the motor vehicle (1) is transmitted to the driver by means of the information device (10) when the vehicle drive motor (2) is switched on and additionally immediately when the request for the maintenance process is identified by the self-monitoring device (8).

## Revendications

1. Procédé pour faciliter l'entretien d'un véhicule (1) automobile, ayant un moteur (2) de traction du véhicule et un accumulateur d'énergie de traction, ayant un dispositif (4) de mesure de niveau pour le moteur (2) de traction du véhicule, dans lequel on détecte, comme besoin d'entretien par une unité (8) de contrôle automatique du véhicule (1) automobile, un besoin d'une opération d'entretien sur le véhicule automobile et dans lequel on transmet à un conducteur du véhicule (1) automobile le besoin d'entretien en tant qu'indication (WHI) d'entretien au moyen d'un dispositif (20) d'information disposé dans le véhicule automobile, **caractérisé en ce que**
l'indication (WHI) d'entretien est transmise au conducteur en fonction d'un niveau (AF) de déconnexion présent lors d'une mise en circuit du moteur (2) de traction du véhicule et détectée par le dispositif (4) de mesure de niveau,
dans lequel on transmet l'indication (WHI) d'entretien lorsque le niveau (AF) de mise en circuit est plus bas qu'une valeur (FS) de seuil de niveau réglée à l'avance ou
lorsqu'une différence (DF) de niveau entre un niveau (EF) de mise en circuit détecté par un le dispositif (4) de mesure de niveau et présent lors d'une mise en circuit suivante à nouveau du moteur (2) de traction du véhicule et le niveau de mise hors circuit précédent indique une valeur de niveau positive.

2. Procédé suivant la revendication 1,
**caractérisé en ce qu'**il est prévu, dans le véhicule (1) automobile, deux préréglages de transmission différents, dont l'un est réglé pour le véhicule (1) automobile, dans lequel suivant un premier préréglage de transmission, on ne transmet l'indication (WHI) d'entretien que si le niveau (AF) de mise en circuit est plus bas que la valeur (FS) de seuil de niveau ou
suivant le deuxième préréglage de transmission, on ne transmet l'indication (WHI) d'entretien que si la différence (DF) de niveau entre le niveau (EF) de mise en circuit et le niveau (AF) de mise en circuit est plus grande que la valeur (FM) de niveau.

3. Procédé suivant la revendication 2,
**caractérisé en ce que** le préréglage de transmission réglé comprend une caractérisation régionale.

4. Procédé suivant l'une des revendications précédentes,
**caractérisé en ce que** l'on transmet l'indication (WHI) d'entretien au conducteur par voie optique et/ou par voie acoustique.

5. Procédé suivant l'une des revendications précédentes,
**caractérisé en ce que** l'on transmet au conducteur, au moyen du dispositif (10) d'information, une indication (WHI) d'entretien concernant la sécurité de marche du véhicule (1) automobile lorsque le moteur (2) de traction est mis en circuit,
supplémentairement directement lorsque le besoin de l'opération d'entretien est détecté par le dispositif (8) de contrôle automatique.
